# EUROPÄISCHE PATENTSCHRIFT

(11) **EP 3 883 836 B1**
(45) Veröffentlichungstag und Bekanntmachung des Hinweises auf die Patenterteilung: **28.12.2022**
(21) Anmeldenummer: 19809401.3
(22) Anmeldetag: 19.11.2019
(51) Int. Cl.: B61L 5/18, B61L 27/53, B61L 7/10, G08C 19/02, G08C 25/02, H04Q 9/00

(54) **VERFAHREN UND VORRICHTUNG ZUM STEUERN UND ÜBERWACHEN EINER FUNKTIONSEINHEIT**
METHOD AND DEVICE FOR CONTROLLING AND MONITORING A FUNCTIONAL UNIT
PROCÉDÉ ET DISPOSITIF DE COMMANDE ET DE SURVEILLANCE D'UNE UNITÉ FONCTIONNELLE

(30) Priorität: 21.11.2018 DE 102018129359
(43) Veröffentlichungstag der Anmeldung: 29.09.2021
(73) Patentinhaber: Thales Management & Services Deutschland GmbH, 71254 Ditzingen (DE)
(72) Erfinder: ZURFLUH, Erwin, 8706 Meilen (CH); SCHWEHN, Oliver, 71636 Ludwigsburg (DE)
(74) Vertreter: Kohler Schmid Möbus Patentanwälte
(86) Internationale Anmeldenummer: PCT/EP2019/081821
(87) Internationale Veröffentlichungsnummer: WO 2020/104468

(56) Entgegenhaltungen:
- EP-A1- 1 594 101
- DE-A1-102011 080 040
- US-A- 4 376 910
- LU HAIFENG ET AL: "Application Technology Investigation of Traffic Signal Controllers Which Output DC Signal", 2018 IEEE INTELLIGENT VEHICLES SYMPOSIUM (IV), IEEE, 26. Juni 2018 (2018-06-26), Seiten 1204-1208, XP033423430, DOI: 10.1109/IVS.2018.8500484 [gefunden am 2018-10-18]

## Beschreibung

### Hintergrund der Erfindung

Die Erfindung betrifft ein Verfahren zum Steuern und Überwachen einer Funktionseinheit mit einer Anzeigeeinrichtung zur Darstellung von Zustandsmustern mit Funktionselementen, wobei die Funktionselemente verschiedene Schaltzustände einnehmen können, wobei ein Zustandsmuster die Schaltzustände der Funktionselemente beschreibt, wobei das Verfahren umfasst:
a. Übertragung eines Steuersignals von einer Steuereinrichtung an die Funktionseinheit, wobei das Steuersignal Informationsinhalt betreffend ein mittels der Anzeigeeinrichtung darzustellendes Zustandsmuster umfasst;
b. Darstellen eines Zustandsmusters durch die Anzeigeeinrichtung mittels des von der Steuereinrichtung an die Funktionseinheit übermittelten Steuersignals, wobei das Zustandsmuster die Schaltzustände mindestens zweier Funktionselemente der Funktionseinheit beschreibt;
c. Erzeugen eines Rücklesesignals, wobei das Rücklesesignal den Informationsinhalt betreffend das dargestellte Zustandsmuster umfasst, welcher durch Erfassung der Schaltzustände der Funktionselemente ermittelt wird,
d**.** Übertragung des Rücklesesignals zur Steuereinrichtung;
e. Vergleich des Informationsinhaltes des Rücklesesignals mit dem Informationsinhalt des Steuersignals.

Ein derartiges Verfahren ist bekannt aus EP 2628652 B1.

Bei Signalanlagen, z.B. Bahnsignalanlagen muss überprüft werden, ob der aktuelle Schaltzustand der Signallampen dem Steuerbefehl entsprechen. Der Informationsinhalt betreffend das darzustellende Zustandsmuster, der im Steuersignal enthalten ist, und der Informationsinhalt betreffend das dargestellte Zustandsmuster, der im Rücklesesignal (Rückleseinformation) enthalten ist, können sich voneinander unterscheiden, wenn bspw. das Steuersignal/Rücklesesignal nicht korrekt übertagen wurde oder ein Funktionselement der Anzeigeeinrichtung defekt ist, also bspw. eine Signallampe nicht leuchtet, obwohl der Befehl zum Leuchten ausgegeben wurde . Eine solche Abweichung gilt es mit dem erfindungsgemäßen Verfahren aufzudecken. Werden in der Signallampe LEDs verwendet, muss kontrolliert werden ob die dem gewünschten Schaltzustand entsprechenden Lichtpunkte leuchten oder nicht.

Die Ansteuerung des Signals erfolgt durch Spannungsbeaufschlagung und die Kontrolle des Schaltzustandes durch eine Strommessung. Werden LEDs als Leuchtmittel verwendet, ist der Strom, der für die Kontrolle des Schaltzustands zur Verfügung steht, niedriger als bei Filamentlampen. Die Kontrolle des Schaltzustands kann lokal mittels Single Element Controller durchgeführt werden. Die Signale müssen dann nur kleine Strecken zurücklegen, so dass der (im Falle von verwendeten LEDs) geringe Strom kein Problem darstellt. Jedoch muss jedes Feldelement mit einem eigenen Steuerkasten und Datenanschluss ausgestattet werden, was einen großen Aufwand bedeutet.

Möchte man diesen Aufwand vermeiden, besteht die Möglichkeit, einen Multi-Element-Controller zu verwenden. Dazu müssen die Signale jedoch über längere Strecken (> 1km) übermittelt werden. Bei Verwendung von LEDs als Leuchtmittel ist der zur Verfügung stehende Strom jedoch zu niedrig, um eine Schaltzustandskontrolle über eine längere Strecke durchführen zu können. Dieses Problem kann dadurch gelöst werden, dass den LEDs Lastwiderstände vorgeschaltet werden, um die Stromstärke entsprechend zu erhöhen. Im letzteren Fall müsste aufgrund des erhöhten Stromverbrauchs dann allerdings eine aufwändigere Stromversorgung bereitgestellt werden.

Zur Übermittlung von Steuer- und Kontrollsignale über längere Strecken können für Steuer- und Kontrollsignal verschiedene Kabel verwendet werden, was jedoch nicht gewünscht ist. Bei Verwendung eines gemeinsamen Kabels besteht jedoch die Gefahr, dass die Signale sich gegenseitig beeinflussen und somit die Gefahr einer Verfälschung von Steurer- und/oder Kontrollsignal besteht.

In konventionellen zentralen Stellwerken wird als Steuersignal (AC-Spannung) und als Rücklesesignal der dazugehörende Strom verwendet. Die Funktionselemente wandeln zuverlässig Spannung in Strom um, doch alle widerstandsbehafteten Störeinflüsse (bspw. Querwiderständen) können Ströme ohne Bezug zur Lichtaussendung erzeugen, was bei Verwendung von bekannten Überwachungsverfahren zu Fehlinterpretation des angezeigten Funktionsmusters führen kann.

Aus EP 2628652 B1 ist Bahnsignal mit LED-Lichtquellen bekannt. Um zu überprüfen, ob die LEDs leuchten, ist am Austrittsort des Lichtes ein Lichtsensor angebracht, der mit einer Lichtüberwachungseinheit verbunden ist. Bei korrektem Lichtstrom schaltet die Lichtüberwachungseinheit den Lastwiderstand zu. Dieser erhöhte Stromfluss entspricht den Eigenschaften bei Betrieb einer Filamentlampe. Damit erkennt die Sicherheitsschaltung, ob die betreffende LED Licht aussendet oder passiv ist. Die stromsparende Eigenschaft der LED geht damit verloren. Weiter muss die Energiezuführung (Bsp. Energiebus) für höhere Leistungen dimensioniert werden. Aus "Application Technology Investigation of Traffic Signal Controllers Which Output DC Signal" von Lu Haifeng et. al., Proceedings 2018 IEEE Intelligent Vehicles Symposium (IV), Seiten 1204-1208 ist zusätzlich bekannt, dass der Informationsinhalt betreffend das darzustellende Zustandsmuster in Form von DC-Signalen auf Steuerleitungen übertragen wird.

### Aufgabe der Erfindung

Es ist Aufgabe der Erfindung, ein Überwachungs- und Steuerungsverfahren für Funktionseinheiten einer Anzeigevorrichtung, insbesondere von einer Signalanlage, vorzuschlagen, mit der einerseits die Funktionseinheit stromsparend betrieben werden kann, der Aufwand für die Überwachung minimiert und eine sichere Signalübertragung gewährleistet werden kann. Insbesondere soll das erfindungsgemäße Überwachungs- und Steuerungsverfahren eine Überwachung/Steuerung mittels eines Multi Element Controller ermöglichen.

### Beschreibung der Erfindung

Diese Aufgabe wird erfindungsgemäß gelöst durch ein Verfahren gemäß Patentanspruch 1 und einer Vorrichtung gemäß Patentanspruch 14.

Erfindungsgemäß wird der Informationsinhalt betreffend das darzustellende Zustandsmuster in Form von DC-Signalen auf einer oder mehreren Leitungen von der Steuereinheit zur Funktionseinheit übertragen und das Rücklesesignal wird in Form eines AC-Signals von der Funktionseinheit zur Steuereinrichtung rückübertragen. Gemäß der vorliegenden Erfindung wird für das Rücklesen des dargestellten Zustandsmusters das Rücklesesignal von der Funktionseinheit zur Steuereinrichtung also als AC-Signal zur Verfügung gestellt. Dazu kann das (vorzugsweise binär kodierte) Zustandsmuster der Funktionseinheit mittels einem oder mehreren Sinus-Frequenzgeneratoren als Einzelfrequenz oder einer Überlagerung von zwei oder mehreren Frequenzen umgewandelt werden.

Die im AC-Signal enthaltenen Frequenzen sind charakteristisch für das Zustandsmuster der Funktionseinheit. Der zu übertragende zurückgelesenen Informationsinhalt betreffend das Zustandsmuster steckt also nicht in der Amplitude des Rücklesesignals sondern in den im Rücklesesignal enthaltenen Frequenzen. Dadurch wird erreicht, dass auch bei Dämpfung/Verzerrung des Rücklesesignals der zu übertragende zurückgelesenen Informationsinhalt nicht verloren geht, solange die enthaltenen Frequenzen identifiziert werden können. Dies ist in der Regel auch dann möglich, wenn das Signal verlustbehaftet ist, da die Verluste lediglich die Amplitude aber nicht die Frequenz betreffen. Die Verwendung von dichroischen Frequenzen verhindert ein Übersprechen von auftretenden harmonischen Oberwellen. Das Rücklesesignal kann auf diese Weise über nur eine einzige Ader und einem gemeinsamen Rückleiter an die Steuereinrichtung übertagen werden.

Die Erfindungsidee beruht darauf, dass für die Übermittlung des Steuersignals ein anders physikalisches Prinzip (Kodierung mittels mehrerer DC-Signalen) verwendet wird als für die Übermittlung der Rückleseinformation (Kodierung mittels eines AC-Signals insbesondere mittels einer oder mehrerer Frequenzen eines AC-Signals).

Aufgrund des großen physikalischen Unterschieds zwischen Steuersignal (Kombination von DC-Signalen) und Rückleseinformation (AC-Signal, insbesondere mit mehreren verschiedenen Frequenzen) wird ein fälschliches Übersprechen oder Rückführen der Information auf der Übertragungsstrecke ausgeschlossen. Somit kann eine hohe Betriebssicherheit auch über große Übertragungsstrecken gewährleistet werden. Aufgrund der physikalischen Unterschiede von Steuersignal und Rückleseinformation können die Leitungen, über die das Steuersignal und die Rückleseinformation übertragen werden, nahe beieinander angeordnet werden, insbesondere innerhalb eines einzigen Kabels. Auf eine Abschirmung zwischen den einzelnen Adern kann verzichtet werden. Das erfindungsgemäße Rücklesen des Zustandsmusters von der Funktionseinheit zur Steuereinrichtung mittels eines anderen physikalisches Prinzips als das, welches für die Übermittlung des Steuersignals von der Steuereinrichtung zur Funktionseinheit verwendet wird, ermöglicht eine verbesserte Entkopplung von Steuersignal und Rücklesesignal. Dies ist insbesondere in Bezug auf die Sicherheitsbetrachtung in Bahnanlagen von entscheidender Bedeutung.

Die **Signalanlage** umfasst eine Steuereinrichtung (für Bahnanwendungen z.B. eine Signalansteuerung eines Stellwerks) und eine Funktionseinheit (für Bahnanwendungen z.B. ein Bahnsignal). Der Zweck der Signalanlage ist die Darstellung eines Zustandsmusters (für Bahnanwendungen z.B. Darstellung eines Signalbildes, Fahrbegriffs) welches zur Verifizierung zurückgelesen wird, wobei sich die Anzeigeeinrichtung entfernt vom Stellwerksgebäude befinden kann.

Die **Steuereinrichtung** ist bei Bahnanwendungen der Ausgabeteil des Stellwerkrechners. Zwecks Verkehrsführung werden an verteilte Funktionseinheiten Zustandsmuster ausgegeben. In der Steuereinrichtung findet der Vergleich des Informationsinhaltes des Rücklesesignals mit dem Informationsinhalt des Steuersignals statt.

Die **Funktionseinheit** ist ein von der Steuereinheit entfernt angeordneter Anlageteil zur Anzeige eines Zustandsmusters. Im Zusammenhang mit Bahnanwendungen ist die Funktionseinheit ein vom Stellwerksgebäude abgesetztes Anlageteil zur Verkehrsführung (z.B. Verkehrssignal, Anzeigevorrichtung). In der Funktionseinheit erfolgt die Umwandlung des DC Steuersignals in eine Anzahl von Schaltsignale der Funktionselemente zur Darstellung eines Zustandsmusters. In der Funktionseinheit werden die Schaltzustände der Funktionselemente erfasst und zwecks Rücklesens dem Signalerzeugungssystem zugeführt.

Die **Anzeigeeinrichtung** ist der Anzeigeteil der Funktionseinheit. Sie umfasst mehrere Funktionselemente. Die Anzeigeeinrichtung stellt das Zustandsmuster dar. Die abgesetzte Darstellung eines Fahrbegriffes ist der eigentliche Sinn und Zweck der Signalanlage bestehend aus Steuereinrichtung und Funktionseinheit.

Das **Funktionselement** ist ein Bauelement der Anzeigeeinrichtung, wobei das Bauelement (für Bahnanwendungen z.B. Lichtpunkt umfassend ein oder mehrere Lichtquellen z.B. Glühlampen, LEDs) durch einen elektrischer Strom betrieben wird. Der Schaltzustand jedes Funktionselementes wird rückgelesen. Durch Anschalten (bspw. der Lichtquellen des Funktionselements) wird ein Stromfluss innerhalb des Funktionselements bewirkt und eine Lichtabstrahlung erzeugt. Sowohl Stromfluss als auch Lichtabstrahlung (Lichtstrom) können zum Erkennen des jeweiligen Schaltzustandes dienen.

**Schaltzustand** des Funktionselements (z.B. Lichtpunkt eines Signals): Jedes Funktionselement kann verschiedene Zustände einnehmen (z.B. an/aus; hell/dunkel). Bei Eisenbahnsignalen kann der Lichtstrom für den Zustand an/hell bei Betrieb in der Nacht reduziert sein. Die Kombination der Zustände der einzelnen Funktionselemente bildet das **Zustandsmuster** der Anzeigeeinrichtung innerhalb einer Funktionseinheit. Das Zustandsmuster der Anzeigeeinrichtung ergibt ein Signalbild, das bei Eisenbahnsignalen einem Fahrbegriff (z.B. "Fahrt 60 km/h") entspricht. Das Zustandsmuster setzt sich aus einer Anzahl von Funktionselementen zusammen, welche in einen bestimmten Schaltzustand gesetzt wurden.

Der **Informationsinhalt** ist die abstrahierte Version von Nutzinformation, d.h. Information betreffend ein anzuzeigendes oder angezeigtes Zustandsmuster. Der Informationsinhalt umfasst also die Information, welches Schaltelement in welchen Schaltzustand versetzt werden soll (Informationsinhalt betreffend ein anzuzeigendes Zustandsmuster) bzw. welches Schaltelement sich in welchem Schaltzustand befindet (Informationsinhalt betreffend ein angezeigtes Zustandsmuster).

Das **Steuersignal** ist eine Kombination von DC-Signalen, die über eine oder mehrere parallele Leitungen übertragen werden, wobei jede Leitung je ein DC-Signal des Steuersignals überträgt. Das Steuersignal kann DC-Signale verschiedener Spannungslevel, insbesondere zwei (binär) oder drei (ternär) Spannungslevel umfassen. Auf diese Weise kann der Informationsinhalt betreffend das gewünschte Zustandsmuster von der Steuereinrichtung an die Funktionseinheit übertragen werden. Vorzugsweise gelangen Spannungssignale mit binärer oder ternärer Ausprägung zur Anwendung. Die letztere Ausführungsform dient zur Reduktion der Anzahl notwendigen Leitungen.

Das **Rücklesesignal** enthält den zurückgelesenen Informationsinhalt (Informationsinhalt betreffend ein angezeigtes Zustandsmuster) über das aktuell auf der Anzeigeeinrichtung dargestellte Zustandsmuster. Als zurückgelesener Informationsinhalt wird für jedes Zustandsmuster ein AC-Signal verwendet, das bspw. ein dem Zustandsmuster zugeordnetes Paar von zwei dichroischen Tonfrequenzen (20 Hz bis 20 kHz) umfasst (z.B. die Frequenzsätze von DMTF).

Vorzugsweise wird vor Übermittlung des Steuersignals an die Funktionseinheit der Informationsinhalt betreffend das darzustellende Zustandsmuster auf den Leitungen mittels der Steuereinrichtung durch DC-Spannungslevel, vorzugsweise binär oder ternär kodiert. Zur Kodierung wird ein Code mit verschiedenen Code-Werten verwendet, wobei jeder Code-Ziffer einem Spannungslevel zugeordnet ist, wobei sich die Spannungslevels der unterschiedlichen Code-Ziffern voneinander unterscheiden. Bei einer binären Kodierung werden zwei Spannungslevel, bei einer ternären Kodierung werden drei Spannungslevel zur Kodierung verwendet. Die Kodierung erfolgt durch Anwenden eines binären oder ternären Codes. Ein binärer Code umfasst zwei Code-Ziffern (bspw. 0, 1), ein ternärer Code umfasst drei Code-Ziffern (bspw. -1, 0, 1 oder 0, 1, 2). Die Code-Ziffern werden durch jeweils ein Spannungslevel gebildet. Die kodierten Werte werden durch Aneinanderreihen einer vorgegebenen Anzahl an Code-Ziffern gebildet. Das DC-Spannungslevel-kodierte Steuersignal wird mittels eines Encoders im Interface Boards erzeugt.

Nach Anwenden des Codes wird das Steuersignal vorzugsweise als binär oder ternär kodiertes elektrisches Spannungssignal an die Funktionseinheit übermittelt. Die Kodierung des Steuersignals erfolgt mittels eines Encoders im Interface Boards. Die Übermittlung des kodierten Steuersignals an die Funktionseinheit erfolgt vorzugsweise mittels eines Steuerkabels mit mehreren Leitungen, wobei das Steuerkabel dazu eingerichtet ist, mindestens zwei, vorzugsweise drei DC-Signale unterschiedlicher Spannungslevel zu übertragen.

Besonders vorteilhaft ist es, wenn das Steuersignal zur Energieversorgung der Funktionseinheit verwendet wird. Auf eine externe Energieversorgung kann dann verzichtet werden.

Diese Energiegewinnung wird bei einer speziellen Variante des erfindungsgemäßen Verfahrens dadurch realisiert, dass das Steuersignal über ein Steuerkabel mit drei oder mehr Leitungen als ternär codiertes Signal übertragen wird, und als Steuersignal aus den möglichen Kombinationen der Code-Ziffern nur diejenigen Kombinationen verwendet werden, die zumindest eine Code-Ziffer aufweisen, die dem höchsten Spannungslevel entspricht und zumindest eine Code-Ziffer, die dem niedrigsten Spannungslevel entspricht. Durch das Vorhandensein mindestens eines obersten und eines untersten Spannungslevels steht bei allen verwendeten kodierten Werten (Code-Ziffern-Kombinationen) auf einem beliebigen Leitungspaar die volle Steuerspannung an. Mit einer Diodenschaltung (6B Brückengleichrichter) kann diese Spannung codeunabhängig rückwirkungsfrei abgegriffen und zum Betreiben der Funktionseinheit verwendet werden.

Der Informationsinhalt betreffend das darzustellende Zustandsmuster wird vorzugsweise in der Funktionseinheit mittels einer elektronischen Dekodiereinheit in das Zustandsmuster der Anzeigeeinrichtung umgewandelt. D.h. die betreffenden Funktionselemente werden in den entsprechenden Schaltzustand versetzt.

Zur Erzeugung des Rücklesesignals werden die Schaltzustände der Funktionselemente erfasst.

Eine Möglichkeit, das Zustandsmuster zu ermitteln, welches den Informationsinhalt des Rücklesesignals bildet, besteht darin, den von den einzelnen Funktionselementen ausgehenden Lichtstrom zu messen. Bei einer besonders bevorzugten Variante des erfindungsgemäßen Verfahrens umfassen die Funktionselemente daher Lichtquellen, insbesondere LEDs, wobei die Schaltzustände der Funktionselemente durch Messung von Lichtströmen, die von den Lichtquellen der jeweiligen Funktionselemente ausgehen, erfasst werden und das Rücklesesignals als Kombination der erfassten Schaltzustände ermittelt wird. Der Lichtstrom wird hierzu mittels eines Photosensors und eines Schwellenvergleichers gemessen und in Bezug auf einen vorgegebenen Schaltzustand bewertet. Dies erfolgt bspw. durch einen Vergleich des gemessenen Lichtstroms mit einem Grenzwert, der für den vorgegebenen Schaltzustand nicht über- bzw. unterschritten werden darf. Die Kombination der Schaltzustände (z.B. Lichtpunkt leuchtet oder Lichtpunkt passiv) bildet das zurückzulesende Zustandsmuster. Dieser Informationsinhalt wird als Rücklesesignal kodiert.

Eine weitere Möglichkeit das Zustandsmuster zu ermitteln besteht darin, den durch die Lichtquelle der Funktionselemente fließenden elektrischen Strom zu messen. Alternativ oder zusätzlich kann daher vorgesehen sein, dass die Funktionselemente Lichtquellen, insbesondere LEDs, umfassen, und dass die Schaltzustände der Funktionselemente durch Messung der in den Lichtquellen fließenden Stromstärken erfasst werden und das Rücklesesignals als Kombination der erfassten Schaltzustände ermittelt wird. Das Rücklesesignal enthält dann also Information über die Stromstärken der durch die Lichtquellen der Funktionselemente fließenden Ströme, welche den Schaltzustand der Funktionseinheit definieren. Die Stromstärke wird einem Schwellenvergleicher zugeführt und in Bezug auf einen vorgegebenen Schaltzustand bewertet. Dies erfolgt bspw. durch einen Vergleich des gemessenen Stroms mit einem Grenzwert, der für den vorgegebenen Schaltzustand nicht über- bzw. unterschritten werden darf. Die Kombination der Schaltzustände (z.B. LED bestromt oder LED passiv) bildet das zurückzulesende Zustandsmuster. Dieser Informationsinhalt wird als Rücklesesignal kodiert.

Vorzugsweise werden die erfassten Schaltzustände zum Kodieren einem Signalerzeugungssystem, zugeführt, in dem das AC-Signal erzeugt wird.

Bei einer besonders bevorzugten Variante des erfindungsgemäßen Verfahrens wird im Signalerzeugungssystem zur Kodierung des Rücklesesignals das AC-Signal in Form von zwei oder mehreren überlagerten diskreten sinusförmigen Signalen mit unterschiedlichen Frequenzen erzeugt. Der Informationsgehalt umfassend die erfassten Schaltzustände der Funktionselemente, die das Zustandsmuster bilden, liegt dann also als AC-Signal mit mehreren überlagerten Frequenzen vor.

Eine besonders bevorzugte Variante des erfindungsgemäßen Verfahrens sieht vor, dass das AC-Signal mittels Doppeltonmehrfrequenz-Verfahrens erzeugt wird.

Vorzugsweise wird das Doppeltonmehrfrequenz-Verfahren innerhalb eines Frequenzbands von 20Hz - 20kHz (hörbare Frequenz) durchgeführt. Mehrfrequenzwahlverfahren (DTMF) sind aus der Telekommunikation zur Übertragung von Informationen bekannt.

Vorzugsweise wird der Informationsgehalt betreffend das dargestellte Zustandsmuster vor der Erzeugung des AC-Signals mittels eines Rücklesekodierer kodiert, vorzugsweise binär kodiert. Im Rücklesekodierer sind die für die relevanten Kombinationen von Schaltzuständen der Funktionselemente zugehörigen Zustandsmuster und die entsprechenden (z. B. binär) kodierten Werte hinterlegt. Da in der Regel nicht alle Kombinationen von Schaltzuständen der Funktionselemente relevant sind, kann die Anzahl der benötigten binär kodierten Werte stark reduziert werden. Vorzugsweise wird daher nur für jedes gültige (relevante) Zustandsmuster (Kombinationen von Schaltzuständen der Funktionselemente; für Bahnsignale: Anzahl der Fahrbegriffe) eine binäre Zahl (binär kodierter Wert) hinterlegt. Die so kodierte Rückleseinformation wird dann mittels eines AC-Signalerzeugungssystems, z.B. eines programmierbaren D oppelton-Frequenzgenerators, in das AC-Signal umgewandelt.

Nach Übertragung der Rückleseinformation als AC-Signal zur Steuereinrichtung wird die Rückleseinformation in der Steuereinheit mittels eines Frequenz-Dekodierers wieder derart dekodiert, dass die Rückleseinformation wieder binär kodiert vorliegt. Der dekodierte Informationsinhalt des Rücklesesignals wird in einem Interface-Board der Steuereinrichtung mit dem Informationsinhalt im Steuersignal verglichen. Wenn eines der Funktionselemente defekt ist oder aufgrund einer fehlerhaften Übertragung des Informationsinhaltes mittels des Steuersignals nicht den gewünschten Zustand und somit die Anzeigeeinrichtung nicht das gewünschten Zustandsmuster darstellt, ergibt der Vergleich, dass der Informationsinhalt des Rücklesesignals nicht mit dem Informationsinhalt des Steuersignals übereinstimmt.

Das erfindungsgemäße Verfahren wird bevorzugt im Bahnbereich zur Steuerung und Kontrolle von Bahnsignalen eingesetzt, mit denen durch unterschiedliche Zustandsmuster unterschiedliche Signalbilder als Fahrbegriffe erzeugt werden. Vorzugsweise ist die Funktionseinheit mit der Anzeigeeinrichtung daher ein sicherheitsrelevantes Element, insbesondere ein Verkehrssignal, vorzugsweise ein Eisenbahnsignal, oder eine Anzeigevorrichtung.

Die Steuereinrichtung kann mehrere Funktionseinheiten steuern und überwachen, z.B. mehrere Rangiersignale an einer Weiche.

Die Erfindung betrifft auch eine Vorrichtung zum Ansteuern und Überwachen einer Funktionseinheit mit einer Anzeigeeinrichtung zur Darstellung von Zustandsmustern mit mindestens einem Funktionselement, wobei die Funktionselemente verschiedenen Schaltzustände einnehmen können und eine Detektionseinrichtung zur Ermittlung von Informationsinhalt betreffend das dargestellte Zustandsmuster durch Erfassung der Schaltzustände der Funktionselemente (4) umfassen. Die erfindungsgemäße Vorrichtung umfasst: die Funktionseinheit, eine Steuereinrichtung zur Ansteuerung der Funktionseinheit mittels Steuersignalen, einer Dekodiereinheit zur Erzeugung eines Zustandsmusters in der Anzeigeeinrichtung aus dem Steuersignal, eine Detektionseinrichtung zur Ermittlung von Informationsinhalt betreffend das dargestellte Zustandsmuster durch Erfassung der Schaltzustände der Funktionselemente. Erfindungsgemäß ist die Vorrichtung zur Durchführung des Verfahrens nach Anspruch 1 eingerichtet und umfasst darüber hinaus: ein Signalerzeugungssystem zur Erzeugung eines Rücklesesignals durch Generierung von AC-Signalen aus dem ermittelten Informationsinhalt betreffend das dargestellte Zustandsmuster und ein Interface-Board zum Vergleich des Informationsinhaltes des Rücklesesignals mit dem Informationsinhalt des Steuersignals.

Vorzugsweise handelt es sich bei der Anzeigeeinrichtung um einen elektrischen Verbraucher, insbesondere ein Lichtpunkt eines Verkehrssignals oder Zugsicherungssignals.

Die Funktionselemente weisen als Lichtquelle vorzugsweise Leuchtmittel, insbesondere LEDs auf. Die korrekte Lichtabstrahlung der LEDs wird einerseits durch direkte Messung des Lichtstroms oder indirekt durch Messung des Betriebsstroms ermittelt. Das Erkennen der korrekten Funktionsweise wird in Form der Rückleseinformation rückgeführt.

Zum digitalen Kodieren des von der Detektionseinrichtung im Funktionselement ermittelten Informationsinhalts betreffend das dargestellte Zustandsmuster umfasst die erfindungsgemäße Vorrichtung vorzugsweise einen Rücklesekodierer.

Bei einer bevorzugten Ausführungsform ist die Steuereinrichtung zur Ansteuerung der Funktionseinheit mittels binär oder ternär codierten Steuersignalen eingerichtet.

Besonders vorteilhaft ist es, wenn eine Einrichtung zur Energieversorgung der Funktionseinheit durch von der Steuereinrichtung generierte Steuersignalen vorhanden ist.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine erfindungsgemäße Vorrichtung in Form einer Signalanlage, bei der das Steuersignal binär kodiert übertragen wird.
- Fig. 2: zeigt eine erfindungsgemäße Vorrichtung in Form einer Signalanlage, bei der das Steuersignal ternär kodiert übertragen wird.
- Fig. 3: zeigt Komponenten der erfindungsgemäßen Vorrichtung, die für die Energieversorgung der Funktionseinheit durch von der Steuereinrichtung generierte Steuersignale notwendig sind.
- Fig. 4: zeigt das Funktionselement mit einer Detektionseinrichtung zur Erfassung der Schaltzustände des Funktionselements mittels Messung des el. Stroms.
- Fig. 5: zeigt das Funktionselement mit einer Detektionseinrichtung zur Erfassung der Schaltzustände des Funktionselements mittels Messung des Lichtstroms
- Fig. 6: zeigt einen beispielhaften Aufbau eines Signalerzeugungssystems zur Erzeugung des Rücklesesignals in Form eines AC-Signals.
- Fig. 7: zeigt einen beispielhaften Aufbau eines Frequenz-Dekodierers.
- Fig. 8: zeigt eine Anordnung von mehreren Rangiersignalen an einer Weiche, die über die erfindungsgemäße Vorrichtung gesteuert werden sollen.
- Fig. 9: zeigt den Aufbau der erfindungsgemäßen Vorrichtung zur Steuerung der Rangiersignale aus Fig. 8.

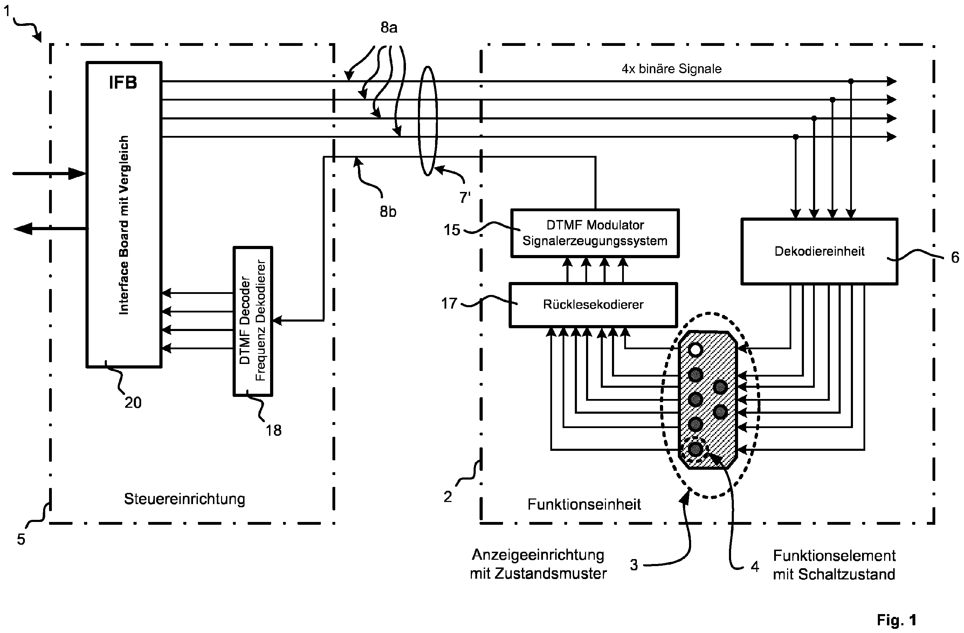

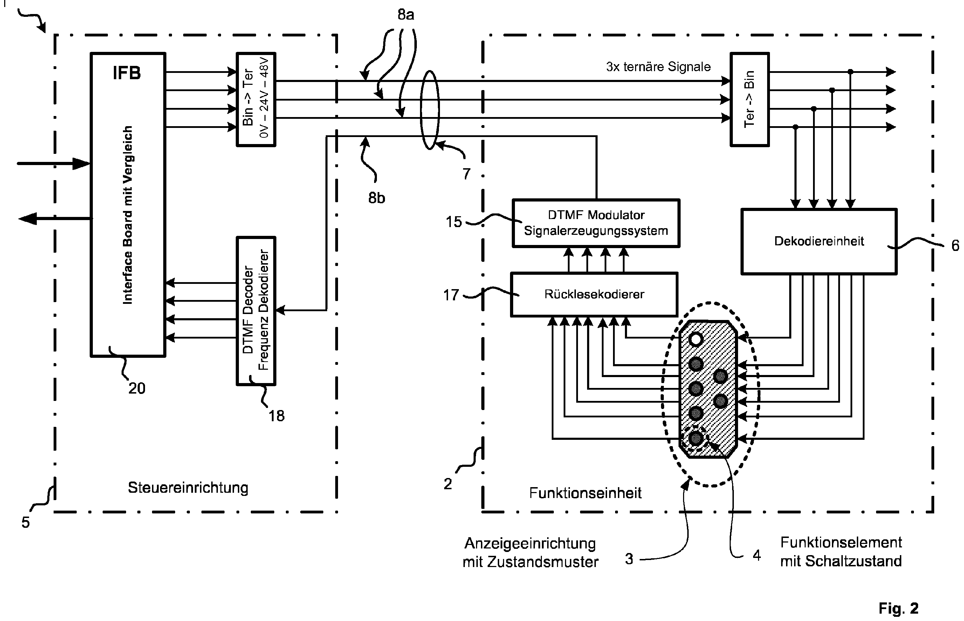

In **Fig. 1** und **Fig. 2** ist der Aufbau der erfindungsgemäßen Vorrichtung am Beispiel einer Signalanlage **1, 1'** zur Steuerung eines Bahnsignals als Funktionseinheit **2** gezeigt. Das Bahnsignal 2 umfasst eine Anzeigeeinrichtung **3** mehrere Funktionselemente **4** in Form von Lichtpunkten, die durch Leuchtmittel (z.B. LEDs) realisiert sind. Die Funktionselemente 4 können verschiedene Schaltzustände annehmen, so dass je nach Schaltzustand der einzelnen Funktionselemente unterschiedliche Signalbilder (Zustandsmuster) angezeigt werden können.

Die Signalanlage 1, 1' umfasst neben der Funktionseinheit 2 eine Steuereinrichtung **5,** die entfernt von der Funktionseinheit 2, bspw. bei einem Stellwerk oder in einem Stellwerk integriert angeordnet ist. Steuereinrichtung 5 und Funktionseinheit 2 sind über ein Steuerkabel **7, 7'** verbunden, über das die Anzeigeeinrichtung 3 der Funktionseinheit 2 angesteuert werden kann, um eine gewünschtes Zustandsmuster anzuzeigen. Das Steuerkabel 7, 7' umfasst mehrere Steuerleitungen **8a** zur Übertragung der Steuersignale von der Steuereinrichtung 5 an die Funktionseinheit 2 und eine Rückleseleitung **8b** zur Übertragung von Rücklesesignale von der Funktionseinheit 2 an die Steuereinrichtung 5. Zur Überprüfung, ob das gewünschte Zustandsmuster auch wirklich durch die Funktionseinheit 2 angezeigt wurde oder ob es bspw. aufgrund eines Übertragungsfehlers oder eines Defekts eines Funktionselements 4 zu einer fehlerhaften Anzeige gekommen ist, wird das tatsächlich von der Anzeigevorrichtung 3 angezeigte Zustandsmuster rückgelesen, an die Steuereinrichtung übermittelt. In der Steuereinrichtung werden dann der Informationsinhalt betreffend das anzuzeigende Zustandsmuster aus dem Steuersignal und der Informationsinhalt betreffend das angezeigte Zustandsmuster aus dem Rücklesesignal verglichen. Weichen die Informationsinhalte voneinander ab, können entsprechende Sicherheitsmaßnahmen ergriffen werden.

Steuersignal und Rücklesesignal werden über dasselbe Kabel übertragen, wobei unterschiedliche Signalarten bzw. Kodierungen verwendet werden, um eine gegenseitige Beeinflussung von Steuersignal mit dem Rücklesesignal zu vermeiden.

Erfindungsgemäß wird das Steuersignal in Form von DC-Spannungssignalen übermittelt. Dazu wird die Information betreffend das anzuzeigende Zustandsmuster als eine Kombination von DC-Signalen generiert, die über die Steuerleitungen 8a übertragen werden, wobei jede Leitung je ein DC-Signal des Steuersignals überträgt. Die Anzahl N der Steuerleitungen 8a des Steuerkabels 7, 7' richtet sich an die Kodierung (Anzahl n der verwendeten Spannungslevel) und der Anzahl an relevanten Zustandsmuster, also der Anzahl m an Zustandsmuster, die auf der Anzeigevorrichtung 3 der Funktionseinheit 2 angezeigt werden sollen (n^{N}≥m). Jede Code-Ziffer des verwendeten kodierten Werts (Bit bei binärer Kodierung, Trit bei ternärer Kodierung) wird durch ein Spanungslevel realisiert, wobei benachbarte Spannungslevel vorzugsweise gleichweit voneinander beabstandet sind.

**Fig. 1** zeigt eine Ausführungsform, bei der das Steuersignal binär kodiert übertragen wird, also unter Verwendung zweier DC-Spannungslevel, übertragen wird. Im vorliegenden Fall sind vier Steuerleitungen 8b vorgesehen, so dass maximal für 16 Zustandsmuster Steuersignale übertragen werden können. Das binär kodierte Steuersignal wird mittels einer Dekodiereinheit **6** in das anzuzeigende Zustandsmuster (Signalbilder) transformiert.

**Fig. 2** zeigt eine Ausführungsform, bei der das Steuersignal vor Übertragung des an die Funktionseinheit 2 aus einem binär kodierten Signal (Kommando) in ein ternär kodiertes Signal konvertiert und dann ternär kodiert, also unter Verwendung dreier DC-Spannungslevel, übertragen wird. Nach der Übertragung des Steuersignals an Funktionseinheit 2 erfolgt eine Rückkonvertierung des ternären Steuersignals zurück in ein binär kodiertes Signal. Das binär kodierte Steuersignal wird auch hier mittels einer Dekodiereinheit 6 in das anzuzeigende Zustandsmuster (Signalbilder) transformiert.

In dem in Fig. 2 gezeigten Fall sind drei Steuerleitungen 8b vorgesehen, so dass maximal für 27 Zustandsmuster ternär kodierte Steuersignale übertragen werden können. Dabei ist jedem Zustandsmuster eine Spannungslevelkombination zugeordnet. Werden den Zustandsmustern nur Spannungslevelkombinationen zugeordnet, die sowohl das höchsten Spannungslevel als auch das niedrigsten Spannungslevel enthält (gültige Code-Werte), kann für jedes Zustandsmuster von einem Steuerleitungspaar die maximale Steuerspannung (Spannungsdifferenz zwischen höchsten und niedrigsten Spannungslevel) abgegriffen und bspw. zur Energieversorgung der Funktionseinheit 2 verwendet werden. In dem in Fig. 2 gezeigten Beispiel verringert sich dann die Anzahl der Zustandsmuster, für die Steuersingale erzeugt werden können, auf zwölf. Die Rate der Schaltbegriffswechsel beträgt vorzugsweise weniger als 10 pro Sekunde.

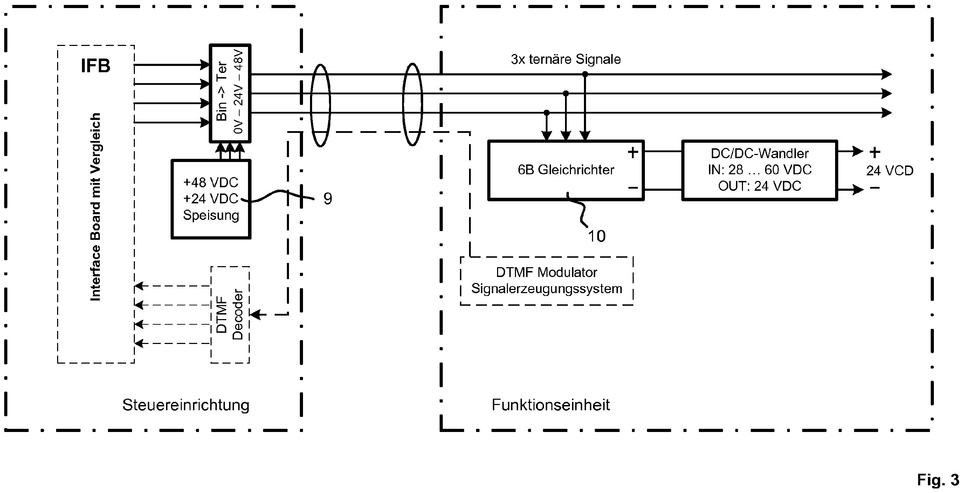

In **Fig. 3** ist dies schematisch dargestellt. Das Steuersignal wird mittels einer Speisung **9** generiert. Das Abgreifen der Spannung von den Steuerleitungen 8a erfolgt über eine Diodenschaltung **10**, insbesondere einen 6B-Brückengleichrichter. Bei jedem gültigen ternären Code-Wert liegt eine maximale Spannungsspanne (hier 48 VDC) vor. Eine Brückengleichrichterkombination 10 (vorzugsweise in der Schaltung 6B) liefert die DC-Rohenergie an einen Eingangsweitbereich DC/DC-Wandler, um die lokale 24 VDC Speisung zu erzeugen.

Die Weitbereichseigenschaft des DC/DC Wandlers kompensiert die Spannungsverluste bei langen, widerstandsbehafteten Leitungen. Da die Leitung immer mit gültigen Code-Ziffern beaufschlagt wird, gibt es keine Lücken in der Spannungsversorgung.

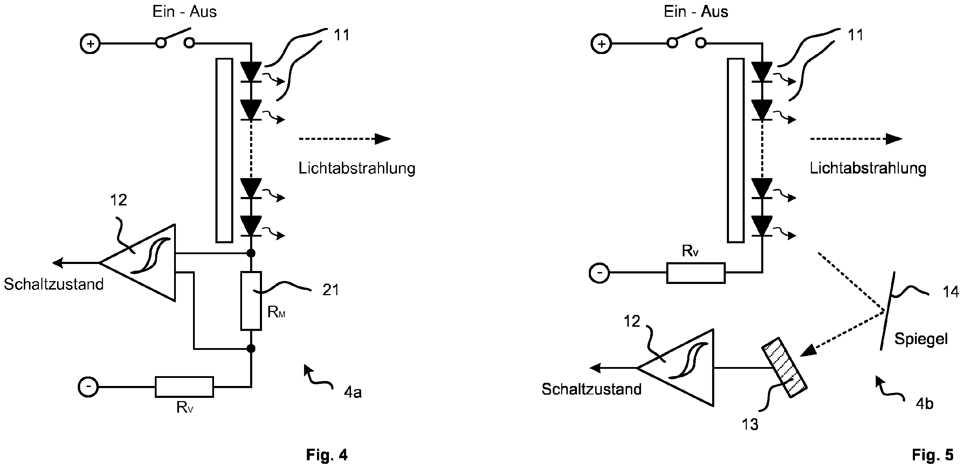

In der Funktionseinheit 2 bewirkt das Steuersignal, dass die Funktionselemente 4 der Anzeigeeinrichtung 3 in den gewünschten Schaltzustand versetzt werden. Zur Erzeugung des Rücklesesignals muss das tatsächlich durch die Anzeigeeinrichtung 3 angezeigte Zustandsmuster ermittelt werden. Fig. 4 und Fig. 5 zeigen Funktionselemente 4a, 4b mit zwei verschiedenen Arten von Detektionseinrichtungen mit denen dies realisiert werden kann.

Für eine Flächenausleuchtung (Matrix) werden eine oder mehrere Ketten von in Serie geschalteten LEDs 11 innerhalb eines Funktionselements parallel verschaltet (nicht gezeigt). In **Fig. 4, 5** sind Funktionselemente 4a, 4b mit einer solche Kette von mehreren in Serie geschalteten LEDs **11** gezeigt.

Bei dem in **Fig. 4** gezeigten Funktionselement 4a werden die Schaltzustände ermittelt, indem der durch die in Serie verschalteten LEDs 11 fließende elektrische Strom mittels eines Strommesswiderstands **21** gemessen wird. Die Stromstärke wird einem Schwellenvergleicher **12** zugeführt und in Bezug auf einen vorgegebenen Schaltzustand bewertet. Das Rücklesesignal enthält dann Informationen über den durch das Funktionselement 4a fließenden Strom.

In **Fig. 5** ist eine weitere Art gezeigt, die Schaltzustände des Funktionselementes 4b zu ermitteln, indem der Gesamtlichtstrom der in Serie verschalteten LEDs 11 detektiert wird. Dies erfolgt mittels eines Photosensors **13**, auf den bspw. mittels eines Spiegels **14** das jeweils ein Teil des von der Gesamtheit der LEDs 11 emittierte Licht gelenkt wird, und mittels eines Schwellenvergleichers 12 gemessen und in Bezug auf einen vorgegebenen Schaltzustand bewertet. Das Rücklesesignal enthält dann Informationen den vom Funktionselement 4b abgegebenen Lichtstrom.

Die Bewertung erfolgt bspw. durch einen Vergleich des gemessenen el. Stroms bzw. Lichtstroms mit einem Grenzwert, der für den vorgegebenen Schaltzustand nicht über- bzw. unterschritten werden darf. Die Kombination der Schaltzustände (z.B. LED leuchtet oder LED passiv) bildet das zurückzulesende Zustandsmuster. Dieser Informationsinhalt wird als Rücklesesignal kodiert.

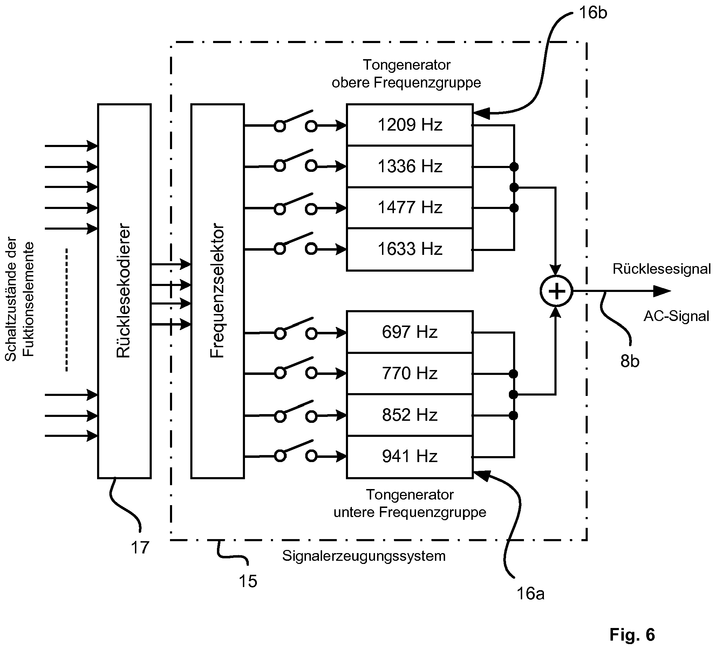

Der zurückgelesene Informationsinhalt wird zunächst in einem Rücklesekodierer **17** binär kodiert (s. Fig. 1 und Fig. 2). Der Rücklesekodierer 17 umfasst eine kombinatorische Logik, welche den Informationsgehalt betreffend der Schaltzustände einem Signalerzeugungssystem **15** (Frequenzselektor) zuführt, indem ein dem detektierten Zustandsmuster zugeordnetes AC-Signal erzeugt wird, das eine dem jeweiligen Zustandsmuster zugeordnete Gruppe, vorzugsweise Paar) von zwei dichroischen Tonfrequenzen (vorzugsweise im Bereich 20 Hz bis 20 kHz) umfasst (z.B. die Frequenzsätze von DMTF). Ein entsprechendes Signalerzeugungssystem 15 zur Erzeugung zweier dichroischen Frequenzen ist beispielhaft in **Fig. 6** gezeigt. Das Signalerzeugungssystem 15 umfasst mehrere (hier zwei) Tongeneratoren **16a, 16b,** wobei der erste Tongenerator 16a Signale einer unteren Frequenzgruppe und der zweite Tongenerator 16b Signale einer oberen Frequenzgruppe generiert. Für jedes Zustandsmuster wird je eine Frequenz (Ton) aus der oberen und der unteren Frequenzgruppe angeschaltet. Das Rücklesesignal besteht vorzugsweise ausschließlich aus zwei sinusförmigen Frequenzen. Im vorliegenden Beispiel werden also Frequenzpaare gebildet. Die Frequenzpaare werden so gewählt, dass Oberwellen vermieden werden, d.h. keine Frequenz ist ein Vielfaches von einer anderen, die Differenz zwischen zwei beliebigen Frequenzen nicht gleich einer der Frequenzen ist, und die Summe von zwei beliebigen Frequenzen entspricht nicht einer der Frequenzen. Das so erzeugte AC-Rücklesesignal wird über die Rückleseleitung 8b des Steuerkabels 7 übertragen. Als Rückleiter (Massepotential), der für die Übertragung des AC-Rücklesesignals elektrisch notwendig ist, wird die Steuerleitung 8a mit dem tiefsten Spannungsniveau des kodierten Steuersignals verwendet.

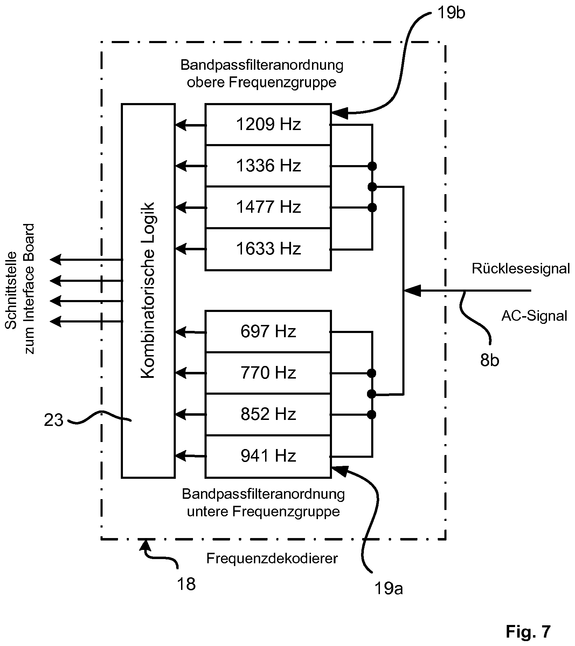

Um die Informationsinhalte von Steuersignale und Rücklesesignal miteinander vergleichen zu können, wird das zur Steuereinrichtung 5 übertragenen AC-Signal in einem Frequenz-Dekodierer **18** der Steuereinrichtung 5 in ein binäres Signal dekodiert. Ein entsprechender Frequenz-Dekodierer 18 ist beispielhaft in **Fig. 7** gezeigt. Der Frequenz-Dekodierer 18 umfasst mehrere (entsprechend der Anzahl der Frequenzen im AC-Rücklesesignal, hier: 2) Bandpassfilteranordnungen **19a, 19b**, die die einzelnen Frequenzen aus dem AC-Rücklesesignal separieren. Mittels einer kombinatorischen Logik **23** wir aus den separierten Frequenzen ein binäres Signal erzeugt, indem dort, wo eine passende Frequenz vorliegt, eine logische 1 erzeugt wird. Das in der Steuereinrichtung 5 als binäres Signal vorliegende Steuersignal und Rücklesesignal werden mittels einer Schnittstellenkarte **20** (Interface-Board) der Steuereinrichtung verglichen.

Kern der vorliegenden Erfindung ist, dass der Informationsinhalt richtungsabhängig innerhalb der erfindungsgemäßen Signalanlage 1, 1' verschiedene physikalische Ausprägungen (Spannung-Strom versus Frequenz) aufweist und damit unterschiedlich auf Störungen reagiert: In der Steuereinrichtung 5 liegt der Informationsgehalt als binäres DC-Signal, (also als ein DC-Spannungssignal, das zwei Spannungslevel aufweisen kann) vor. Zwischen Steuereinrichtung 5 und Funktionseinheit 2 kann der Informationsgehalt als ternäres DC-Signal (drei Spannungslevel) vorliegen (Fig. 2). In der Anzeigeeinrichtung 3 liegt der Informationsgehalt als Zustandsmuster vor. Bei der Übertragung des Rücklesesignals von der Funktionseinheit 2 zur Steuereinrichtung 5 liegt der Informationsgehalt als AC-Signal (insbesondere mit zwei dichroischen Tonfrequenzen) vor. Dadurch wird eine physikalisch diversitäre Übertragung des Steuersignals (DC-Signal, z.B. ternärer Code) und des Rücklesesignals (AC-Signal, z.B. Paar von zwei dichroischen Tonfrequenzen) erreicht. Auf diese Weise können Störeinflüsse sicher erkannt werden, da Leitungs- Isolations- und EMV-Störungen keine mit dem bidirektionalen Übertragungsverfahren (Spannung vs. dichroische Frequenzen) korrelierenden Fehlinformationen erzeugen.

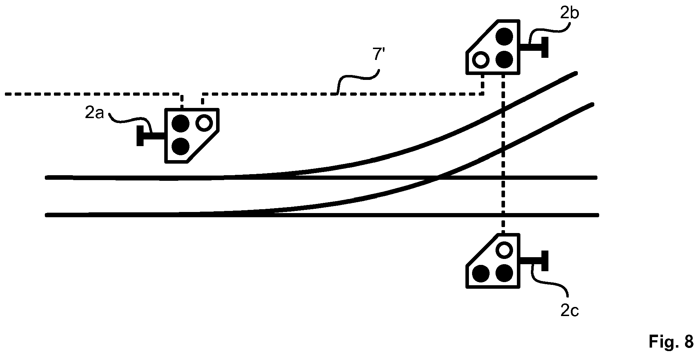

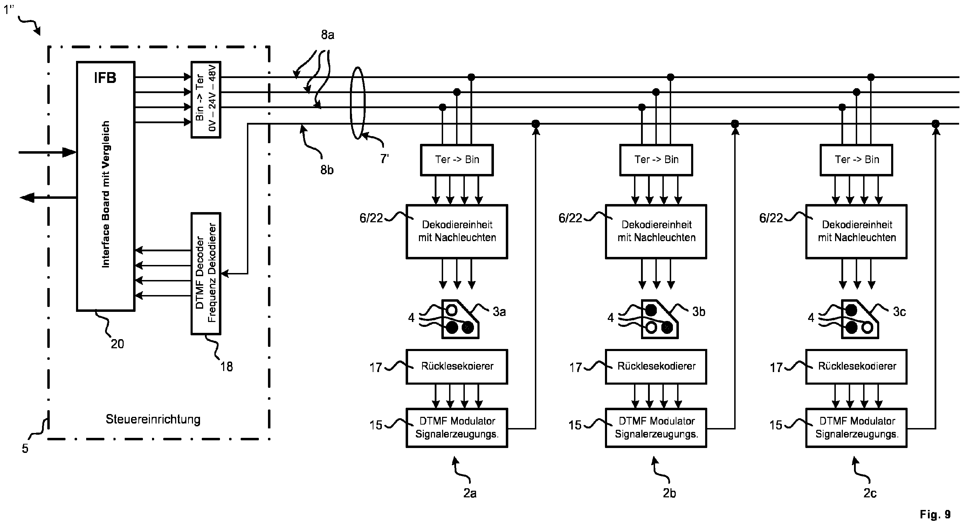

Mit dem erfindungsgemäßen Verfahren bzw. der erfindungsgemäßen Vorrichtung können auch mehrere Funktionseinheiten **2a, 2b, 2c** gesteuert und überwacht werden, bspw. mehrere Rangiersignale an einer Weiche, wie in **Fig. 8** dargestellt. Das Steuerkabel 7' verbindet dabei die verschiedenen Funktionseinheiten 2a, 2b, 2c seriell. Die Verschaltung innerhalb einer erfindungsgemäßen Signalanlage **1"** ist in **Fig. 9** gezeigt.

Die drei Funktionseinheiten 2a, 2b, 2c umfassen im vorliegenden Beispiel jeweils drei Lichtpunkte (Funktionselemente 4 mit Detektionseinrichtung) und werden angesteuert wie eine einzige Funktionseinheit mit 3x3 = 9 Funktionselementen und 27 Zustandsmustern. Das heißt, das Steuersignal umfasst gleichzeitig Informationen betreffend alle drei Funktionseinheiten 2a, 2b, 2c oder mit andere Worten: das Zustandsmuster wird gebildet durch die Schaltzustände der Funktionselemente 4 aller Funktionseinheiten 2a, 2b, 2c.

Jede Funktionseinheit 2a, 2b, 2c umfasst eine Dekodiereinheit 6, einen Rücklesekodierer 17 und ein Signalerzeugungssystem 15. Das Rücklesesignal umfasst Teil-Rücklesesignale, wobei in jeder Funktionseinheit 2a, 2b, 2c ein Teil-Rücklesesignal generiert wird. Die Teil-Rücklesesignale der verschiedenen Funktionseinheiten 2a, 2b, 2c werden in dieselbe Rückleseleitung 8b eingespeist. Mit den 12 verfügbaren ternär kodierten Werten, welche die Eigenschaft der Energiegewinnung beinhalten, können die 3x3 = 9 Funktionselementen einzeln angesteuert werden, jedoch nicht die 27 möglichen Zustandsmuster aller 3 Funktionseinheiten. In der vorliegenden Ausführung wird das Zustandsmuster der Signalanlage 1" nacheinander mittels 3 Teil-Zustandsmuster übermittelt. Das heißt, in einem ersten Zeitfenster (z.B. 0-300 ms) wird ein Steuersignal übermittelt, dessen Informationsinhalt das durch das erste Rangiersignal 2a anzuzeigende Teil-Zustandsmuster betrifft und für die beiden andere Rangiersignale 2b, 2c eine Dunkelinformation enthält (Funktionselemente der anderen Rangiersignale 2b, 2c sollten gemäß dieser Information nicht leuchten). In einem zweiten Zeitfenster (z.B. 300-600 ms) wird ein Steuersignal übermittelt, dessen Informationsinhalt das durch das zweite Rangiersignal 2b anzuzeigende Teil-Zustandsmuster betrifft und für die beiden andere Rangiersignale 2a, 2c eine Dunkelinformation enthält (Funktionselemente 4 der anderen Rangiersignale 2a, 2c sollten nach dieser Information nicht leuchten), usw.. Nur in diesem, den einzelnen Rangiersignalen 2a, 2b, 2c zugeordneten Zeitfenster antwortet das angesprochene Rangiersignal 2a, 2b, 2c mittel der integrierten Detektionseinrichtung über den Rücklesekodierer 17 und dem Signalerzeugungssystem 15 mit dem entsprechenden Teil-Rücklesesignal. Um zu verhindern, dass die Funktionselemente 4 flackern, ist in den Rangiersignalen 2a, 2b, 2c ein Nachleucht-Timer **22** eingebaut, der die Funktionselemente 4 in den beiden Zeitfenstern, in denen für das jeweilige Rangiersignale 2a, 2b, 2c eine Dunkelinformation übertragen wird, am Leuchten hält.

Falls kein neues korrektes DC-Steuersignal am Rangiersignale 2a, 2b, 2c ankommt (z. B. aufgrund einer gebrochenen Steuerleitung 8a), fallen nach Ablauf des Nachleucht-Timer 22 alle Lichtpunkte auf "dunkel". Wenn das ganze Steuerkabel 7' gerissen ist, gibt es ohnehin keine Energie im Rangiersignal 2a, 2b, 2c. Bei Drahtbruch gibt es immer eine Diskrepanz zum Steuersignal - die Reaktion der Schnittstellenkarte 20 ist das Abschalten der Rangiersignale 2a, 2b, 2c. Mit dem erfindungsgemäßen Verfahren und dem erfindungsgemäßen Aufbau kann daher eine Fehlfunktion der Signalanlage 1" zuverlässig nachgewiesen werden.

### Bezugszeichenliste

- 1, 1', 1": Signalanlage
- 2: Funktionseinheit (bspw. Bahnsignal)
- 2a, 2b, 2c: mehrere über dieselbe Steuereinrichtung gesteuerte Funktionseinheiten (bspw. Rangiersignale)
- 3: Anzeigeeinrichtung
- 3a, 3b, 3c: Anzeigeeinrichtungen von mehreren über dieselbe Steuereinrichtung gesteuerte Funktionseinheiten
- 4, 4a, 4b: Funktionselement (mit Lichtquellen 11 und Detektionseinrichtung)
- 5: Steuereinrichtung
- 6: Dekodiereinheit
- 7, 7': Steuerkabel
- 8a: Steuerleitungen
- 8b: Rückleseleitung
- 9: Speisung für Steuersignal
- 10: Diodenschaltung zum Abgreifen der Spannung (6B Gleichrichter)
- 11: LEDs eines Funktionselementes
- 12: Schwellenvergleicher
- 13: Photosensor
- 14: Spiegel
- 15: Signalerzeugungssystem
- 16a,16b: Tongeneratoren
- 17: Rücklesekodierer
- 18: Frequenz-Dekodierer
- 19a, 19b: Bandpassfilteranordnungen
- 20: Schnittstellenkarte (Interface-Board)
- 21: Strommesswiderstand
- 22: Nachleucht-Timer
- 23: kombinatorische Logik

## Patentansprüche

1. Verfahren zum Steuern und Überwachen einer Funktionseinheit (2; 2a, 2b, 2c) mit einer Anzeigeeinrichtung (3; 3a,3b,3c) zur Darstellung von Zustandsmustern mit Funktionselementen (4, 4a, 4b), wobei die Funktionselemente (4, 4a, 4b) verschiedene Schaltzustände einnehmen können, wobei ein Zustandsmuster die Schaltzustände der Funktionselemente (4, 4a, 4b) beschreibt, wobei das Verfahren umfasst:
a. Übertragung eines Steuersignals von einer Steuereinrichtung (5) an die Funktionseinheit (2; 2a, 2b, 2c), wobei das Steuersignal Informationsinhalt betreffend ein mittels der Anzeigeeinrichtung (3; 3a, 3b, 3c) darzustellendes Zustandsmuster umfasst;
b. Darstellen eines Zustandsmusters durch die Anzeigeeinrichtung (3; 3a,3b,3c) mittels des von der Steuereinrichtung an die Funktionseinheit (2; 2a, 2b, 2c) übermittelten Steuersignals, wobei das Zustandsmuster die Schaltzustände mindestens zweier Funktionselemente (4, 4a, 4b) der Funktionseinheit (2; 2a, 2b, 2c) beschreibt;
c. Erzeugen eines Rücklesesignals, wobei das Rücklesesignal Informationsinhalt betreffend das dargestellte Zustandsmuster umfasst, welcher durch Erfassung der Schaltzustände der Funktionselemente (4, 4a, 4b) ermittelt wird,
d. Übertragung des Rücklesesignals zur Steuereinrichtung (5);
e. Vergleich des Informationsinhaltes des Rücklesesignals mit dem Informationsinhalt des Steuersignals;
wobei
der Informationsinhalt betreffend das darzustellende Zustandsmuster in Form von DC-Signalen auf einer oder mehreren Steuerleitungen (8a) von der Steuereinheit (5) zur Funktionseinheit (2; 2a, 2b, 2c) übertragen wird
**dadurch gekennzeichnet, dass**
das Rücklesesignal in Form eines AC-Signals von der Funktionseinheit (2; 2a, 2b, 2c) zur Steuereinrichtung (5) rückübertragen wird.

2. Verfahren nach Anspruch 1, **dadurch gekennzeichnet, dass** vor Übermittlung des Steuersignals an die Funktionseinheit (2; 2a, 2b, 2c) der Informationsinhalt betreffend das darzustellende Zustandsmuster auf den Steuerleitungen (8a) mittels der Steuereinrichtung (5) durch DC-Spannungslevel kodiert, vorzugsweise binär oder ternär kodiert wird.

3. Verfahren nach einem der vorhergehenden Ansprüche, **dadurch gekennzeichnet, dass** das Steuersignal zur Energieversorgung der Funktionseinheit (2; 2a, 2b, 2c) verwendet wird.

4. Verfahren nach Anspruch 2 und 3, **dadurch gekennzeichnet,**
**dass** das Steuersignal über ein Steuerkabel (7') mit drei oder mehr Leitungen als ternär codiertes Signal übertragen wird, und
**dass** als Steuersignal aus den möglichen Kombinationen der Code-Ziffern nur diejenigen Kombinationen verwendet werden, die zumindest eine Code-Ziffer aufweisen, die dem höchsten Spannungslevel entspricht und zumindest eine Code-Ziffer, die dem niedrigsten Spannungslevel entspricht.

5. Verfahren nach einem der vorhergehenden Ansprüche, **dadurch gekennzeichnet, dass** der Informationsinhalt betreffend das darzustellende Zustandsmuster in der Funktionseinheit (2; 2a, 2b, 2c) mittels einer elektronischen Dekodiereinheit in das Zustandsmuster der Anzeigeeinrichtung (3; 3a,3b,3c) umgewandelt wird.

6. Verfahren nach einem der Ansprüche 1 bis 5, **dadurch gekennzeichnet, dass** die Funktionselemente (4b) Lichtquellen, insbesondere LEDs, umfassen und dass die Schaltzustände der Funktionselemente (4b) durch Messung von Lichtströmen, die von den Lichtquellen der jeweiligen Funktionselemente (4b) ausgehen, erfasst werden und das Rücklesesignals als Kombination der erfassten Schaltzustände ermittelt wird.

7. Verfahren nach einem der Ansprüche 1 bis 5, **dadurch gekennzeichnet, dass** die Funktionselemente (4a) Lichtquellen, insbesondere LEDs, umfassen und dass die Schaltzustände der Funktionselemente (4a) durch Messung der in den Lichtquellen fließenden Stromstärke erfasst werden und das Rücklesesignals als Kombination der erfassten Schaltzustände ermittelt wird.

8. Verfahren nach einem der vorhergehenden Ansprüche, **dadurch gekennzeichnet, dass** die erfassten Schaltzustände zum Kodieren einem Signalerzeugungssystem (15), zugeführt werden, in dem das AC-Signal erzeugt wird.

9. Verfahren nach Anspruch 8, **dadurch gekennzeichnet, dass** im Signalerzeugungssystem (15) zur Kodierung des Rücklesesignals ein AC-Signal in Form von zwei oder mehreren überlagerten diskreten sinusförmigen Signalen mit unterschiedlichen Frequenzen erzeugt wird.

10. Verfahren nach einem der vorhergehenden Ansprüche, **dadurch gekennzeichnet, dass** das AC-Signal mittels eines Doppeltonmehrfrequenz-Verfahrens erzeugt wird.

11. Verfahren nach einem der vorhergehenden Ansprüche, **dadurch gekennzeichnet, dass** der Informationsgehalt betreffend das dargestellte Zustandsmuster vor der Erzeugung des AC-Signals mittels eines Rücklesekodierers (17) kodiert, vorzugsweise binär kodiert, wird.

12. Verfahren nach einem der vorhergehenden Ansprüche, **dadurch gekennzeichnet, dass** die Funktionseinheit (2; 2a, 2b, 2c) mit der Anzeigeeinrichtung (3; 3a,3b,3c) ein sicherheitsrelevantes Element, insbesondere ein Verkehrssignal, vorzugsweise ein Eisenbahnsignal, oder eine Anzeigevorrichtung ist.

13. Verfahren nach einem der vorhergehenden Ansprüche, **dadurch gekennzeichnet, dass** die Steuereinrichtung (5) mehrere Funktionseinheiten (2a,2b,2c) steuert und überwacht.

14. Vorrichtung (1; 1'; 1") zum Ansteuern und Überwachen einer Funktionseinheit (2; 2a,2b,2c) mit einer Anzeigeeinrichtung (3; 3a,3b,3c) zur Darstellung von Zustandsmustern mit Funktionselementen (4, 4a, 4b), wobei die Funktionselemente (4, 4a, 4b) verschiedene Schaltzustände einnehmen können und eine Detektionseinrichtung zur Ermittlung von Informationsinhalt betreffend das dargestellte Zustandsmuster durch Erfassung der Schaltzustände der Funktionselemente (4, 4a, 4b) umfassen, **dadurch gekennzeichnet, dass** die Vorrichtung (1; 1'; 1") umfasst:
die Funktionseinheit (2; 2a, 2b, 2c),
eine Steuereinrichtung (5) zur Ansteuerung der Funktionseinheit (2; 2a,2b,2c) mittels Steuersignalen,
einer Dekodiereinheit (6) zur Erzeugung eines Zustandsmusters in der Anzeigeeinrichtung (3; 3a,3b,3c) aus dem Steuersignal,
**dadurch gekennzeichnet, dass** die Vorrichtung (1; 1'; 1") zur Durchführung des Verfahrens nach einem der vorhergehenden Ansprüche eingerichtet ist und darüber hinaus umfasst:
ein Signalerzeugungssystem (15) zur Erzeugung eines Rücklesesignals durch Generierung von AC-Signalen aus dem ermittelten Informationsinhalt betreffend das dargestellte Zustandsmuster, und
ein Interface-Board (20) zum Vergleich des Informationsinhaltes des Rücklesesignals mit dem Informationsinhalt des Steuersignals.

15. Vorrichtung (1; 1'; 1") nach Anspruch 14, **dadurch gekennzeichnet, dass** mindestens ein Funktionselement (4, 4a, 4b) ein elektrischer Verbraucher, insbesondere ein Lichtpunkt eines Verkehrssignals oder Zugsicherungssignals ist.

16. Vorrichtung (1; 1'; 1") nach Anspruch 14 oder 15, **dadurch gekennzeichnet, dass** die Funktionselemente (4, 4a, 4b) als Lichtquellen LEDs aufweisen.

17. Vorrichtung (1; 1'; 1") nach Anspruch einem der Ansprüche 14 bis 16, **dadurch gekennzeichnet, dass** die Vorrichtung einen Rücklesekodierer (17) zum digitalen Kodieren des von der Detektionseinrichtung im Funktionselement (4, 4a, 4b) ermittelten Informationsinhalts betreffend das dargestellte Zustandsmuster umfasst.

18. Vorrichtung (1; 1'; 1") nach einem der Ansprüche 14 bis 17, **dadurch gekennzeichnet, dass** die Steuereinrichtung (5) zur Ansteuerung der Funktionseinheit (2; 2a, 2b, 2c) mittels binär oder ternär codierten Steuersignalen eingerichtet ist.

19. Vorrichtung nach einem der Ansprüche 14 bis 18, **dadurch gekennzeichnet, dass** eine Einrichtung zur Energieversorgung der Funktionseinheit durch von der Steuereinrichtung (5) generierte Steuersignalen vorhanden ist.

## Claims

1. Method for controlling and monitoring a functional unit (2; 2a, 2b, 2c) having a display device (3; 3a, 3b, 3c) for displaying state patterns having functional elements (4, 4a, 4b), it being possible for the functional elements (4, 4a, 4b) to assume different switching states, a state pattern describing the switching states of the functional elements (4, 4a, 4b), the method comprising:
a. transmitting a control signal from a control device (5) to the functional unit (2; 2a, 2b, 2c), the control signal comprising information content relating to a state pattern to be shown by means of the display device (3; 3a, 3b, 3c);
b. representing a state pattern via the display device (3; 3a, 3b, 3c) by means of the control signal transmitted from the control device to the functional unit (2; 2a, 2b, 2c), the state pattern describing the switching states of at least two functional elements (4, 4a, 4b) of the functional unit (2; 2a, 2b, 2c);
c. generating a readback signal, the readback signal comprising information content relating to the state pattern shown, which information content is determined by detecting the switching states of the functional elements (4, 4a, 4b),
d. transmitting the readback signal to the control device (5);
e. comparing the information content of the readback signal with the information content of the control signal;
the information content relating to the state pattern to be shown being transmitted in the form of DC signals onto one or more control lines (8a) from the control unit (5) to the functional unit (2; 2a, 2b, 2c),
**characterized in that** the readback signal is transmitted back from the functional unit (2; 2a, 2b, 2c) to the control device (5) in the form of an AC signal.

2. Method according to claim 1, **characterized in that** before the control signal is transmitted to the functional unit (2; 2a, 2b, 2c), the information content relating to the state pattern to be shown is encoded, preferably in binary or ternary, onto the control lines (8a) by means of the control device (5) via DC voltage levels.

3. Method according to either of the preceding claims, **characterized in that** the control signal is used to supply energy to the functional unit (2; 2a, 2b, 2c).

4. Method according to claims 2 and 3, **characterized in that**
the control signal is transmitted via a control cable (7') having three or more lines as a ternary encoded signal, and
as a control signal, from the possible combinations of code digits only those combinations are used that have at least one code digit that corresponds to the highest voltage level and at least one code digit that corresponds to the lowest voltage level.

5. Method according to any of the preceding claims, **characterized in that** the information content relating to the state pattern to be shown in the functional unit (2; 2a, 2b, 2c) is converted into the state pattern of the display device (3; 3a, 3b, 3c) by means of an electronic decoding unit.

6. Method according to any of claims 1 to 5, **characterized in that** the functional elements (4b) comprise light sources, in particular LEDs, and that the switching states of the functional elements (4b) are detected by measuring luminous fluxes emanating from the light sources of the respective functional elements (4b), and the readback signal is determined as a combination of the detected switching states.

7. Method according to any of claims 1 to 5, **characterized in that** the functional elements (4a) comprise light sources, in particular LEDs, and that the switching states of the functional elements (4a) are detected by measuring the current strength flowing in the light sources and the readback signal is determined as a combination of the detected switching states.

8. Method according to any of the preceding claims, **characterized in that** the detected switching states are fed to a signal generation system (15) for encoding, in which system the AC signal is generated.

9. Method according to claim 8, **characterized in that** an AC signal in the form of two or more superimposed discrete sinusoidal signals having different frequencies is generated in the signal generation system (15) for encoding the readback signal.

10. Method according to any of the preceding claims, **characterized in that** the AC signal is generated by means of a two-tone multi-frequency method.

11. Method according to any of the preceding claims, **characterized in that** the information content relating to the state pattern shown is encoded, preferably in binary, by means of a readback encoder (17) before the AC signal is generated.

12. Method according to any of the preceding claims, **characterized in that** the functional unit (2; 2a, 2b, 2c) having the display device (3; 3a, 3b, 3c) is a safety-relevant element, in particular a traffic signal, preferably a railway signal, or a display apparatus.

13. Method according to any of the preceding claims, **characterized in that** the control device (5) controls and monitors a plurality of functional units (2a, 2b, 2c).

14. Apparatus (1; 1'; 1") for controlling and monitoring a functional unit (2; 2a, 2b, 2c) comprising a display device (3; 3a, 3b, 3c) for displaying state patterns having functional elements (4, 4a, 4b), it being possible for the functional elements (4, 4a, 4b) to assume different switching states and said elements comprising a detection device for determining information content relating to the state pattern shown by detecting the switching states of the functional elements (4, 4a, 4b),
**characterized in that** the apparatus (1; 1'; 1") comprises:
the functional unit (2; 2a, 2b, 2c),
a control device (5) for controlling the functional unit (2; 2a, 2b, 2c) by means of control signals,
a decoding unit (6) for generating a state pattern in the display device (3; 3a, 3b, 3c) from the control signal,
**characterized in that** the apparatus (1; 1'; 1") is configured to carry out the method according to any of the preceding claims and also comprises:
a signal generation system (15) for generating a readback signal by generating AC signals from the determined information content relating to the state pattern shown, and
an interface board (20) for comparing the information content of the readback signal with the information content of the control signal.

15. Apparatus (1; 1'; 1") according to claim 14, **characterized in that** at least one functional element (4, 4a, 4b) is an electrical load, in particular a point of light of a traffic signal or train protection signal.

16. Apparatus (1; 1'; 1") according to either claim 14 or claim 15, **characterized in that** the functional elements (4, 4a, 4b) have LEDs as light sources.

17. Apparatus (1; 1'; 1") according to any of claims 14 to 16, **characterized in that** the apparatus comprises a readback encoder (17) for digitally encoding the information content relating to the state pattern shown, which information content is determined by the detection device in the functional element (4, 4a, 4b).

18. Apparatus (1; 1'; 1") according to any of claims 14 to 17, **characterized in that** the control device (5) is configured to control the functional unit (2; 2a, 2b, 2c) by means of binary or ternary encoded control signals.

19. Apparatus according to any of claims 14 to 18, **characterized in that** there is a device for supplying energy to the functional unit via control signals generated by the control device (5).

## Revendications

1. Procédé de commande et de surveillance d'une unité fonctionnelle (2; 2a, 2b, 2c) comportant un dispositif d'affichage (3; 3a, 3b, 3c) permettant de représenter des modèles d'état et comportant des éléments fonctionnels (4, 4a, 4b), les éléments fonctionnels (4, 4a, 4b) pouvant prendre différents états de commutation, un modèle d'état décrivant les états de commutation des éléments fonctionnels (4, 4a, 4b), le procédé comprenant :
a. la transmission d'un signal de commande d'un dispositif de commande (5) à l'unité fonctionnelle (2; 2a, 2b, 2c), le signal de commande comprenant un contenu informatif concernant un modèle d'état à représenter au moyen du dispositif d'affichage (3; 3a, 3b, 3c) ;
b. la représentation d'un modèle d'état par le dispositif d'affichage (3; 3a, 3b, 3c) à l'aide du signal de commande transmis du dispositif de commande à l'unité fonctionnelle (2; 2a, 2b, 2c), le modèle d'état décrivant les états de commutation d'au moins deux éléments fonctionnels (4, 4a, 4b) de l'unité fonctionnelle (2; 2a, 2b, 2c) ;
c. la génération d'un signal de relecture, le signal de relecture comprenant un contenu informatif concernant le modèle d'état représenté qui est déterminé par la détection des états de commutation des éléments fonctionnels (4, 4a, 4b),
d. la transmission du signal de relecture au dispositif de commande (5) ;
e. la comparaison du contenu informatif du signal relu avec le contenu informatif du signal de commande ;
le contenu informatif concernant le modèle d'état à représenter étant transmis sous la forme de signaux CC sur une ou plusieurs lignes de commande (8a) de l'unité de commande (5) à l'unité fonctionnelle (2; 2a, 2b, 2c),
**caractérisé en ce que**
le signal de relecture est retransmis de l'unité fonctionnelle (2; 2a, 2b, 2c) au dispositif de commande (5) sous la forme d'un signal CA.

2. Procédé selon la revendication 1, **caractérisé en ce que**, avant la transmission du signal de commande à l'unité fonctionnelle (2; 2a, 2b, 2c), le contenu informatif concernant le modèle d'état à représenter est codé, de préférence de manière binaire ou ternaire, sur les lignes de commande (8a) au moyen du dispositif de commande (5) par des niveaux de tension CC.

3. Procédé selon l'une des revendications précédentes, **caractérisé en ce que** le signal de commande est utilisé pour alimenter l'unité fonctionnelle (2; 2a, 2b, 2c) en énergie.

4. Procédé selon les revendications 2 et 3, **caractérisé**
**en ce que** le signal de commande est transmis par l'intermédiaire d'un câble de commande (7') comportant trois lignes ou plus en tant que signal codé de manière ternaire, et
**en ce que** seules les combinaisons qui présentent au moins un chiffre de code correspondant au niveau de tension le plus élevé et au moins un chiffre de code correspondant au niveau de tension le plus bas sont utilisées comme signal de commande, parmi les combinaisons possibles des chiffres de code.

5. Procédé selon l'une des revendications précédentes, **caractérisé en ce que** le contenu informatif concernant le modèle d'état à représenter dans l'unité fonctionnelle (2 ; 2a, 2b, 2c) est converti en modèle d'état du dispositif d'affichage (3 ; 3a, 3b, 3c) au moyen d'une unité de décodage électronique.

6. Procédé selon l'une des revendications 1 à 5, **caractérisé en ce que** les éléments fonctionnels (4b) comprennent des sources lumineuses, en particulier des DEL, et **en ce que** les états de commutation des éléments fonctionnels (4b) sont détectés par la mesure de courants lumineux qui partent des sources lumineuses des éléments fonctionnels (4b) respectifs, et le signal de relecture est déterminé comme une combinaison des états de commutation détectés.

7. Procédé selon l'une des revendications 1 à 5, **caractérisé en ce que** les éléments fonctionnels (4a) comprennent des sources lumineuses, en particulier des DEL, et **en ce que** les états de commutation des éléments fonctionnels (4a) sont détectés par la mesure de l'intensité du courant circulant dans les sources lumineuses, et le signal de relecture est déterminé comme une combinaison des états de commutation détectés.

8. Procédé selon l'une des revendications précédentes, **caractérisé en ce que** les états de commutation détectés sont acheminés vers un système de génération de signaux (15), dans lequel le signal CA est généré, pour être codés.

9. Procédé selon la revendication 8, **caractérisé en ce que**, dans le système de génération de signaux (15), un signal CA est généré sous la forme de deux signaux sinusoïdaux discrets superposés ou plus, lesquels comportant des fréquences différentes, pour coder le signal de relecture.

10. Procédé selon l'une des revendications précédentes, **caractérisé en ce que** le signal CA est généré au moyen d'un procédé multifréquence à double tonalité.

11. Procédé selon l'une des revendications précédentes, **caractérisé en ce que** le contenu informatif concernant le modèle d'état représenté est codé, de préférence de manière binaire, au moyen d'un codeur de relecture (17) avant la génération du signal CA.

12. Procédé selon l'une des revendications précédentes, **caractérisé en ce que** l'unité fonctionnelle (2; 2a, 2b, 2c) comportant le dispositif d'affichage (3; 3a, 3b, 3c) est un élément important pour la sécurité, en particulier un signal de circulation, de préférence un signal ferroviaire, ou un dispositif d'affichage.

13. Procédé selon l'une des revendications précédentes, **caractérisé en ce que** le dispositif de commande (5) commande et surveille plusieurs unités fonctionnelles (2a, 2b, 2c).

14. Appareil (1; 1'; 1") de commande et de surveillance d'une unité fonctionnelle (2; 2a, 2b, 2c) comportant un dispositif d'affichage (3; 3a, 3b, 3c) permettant de représenter des modèles d'état et comportant des éléments fonctionnels (4, 4a, 4b), les éléments fonctionnels (4, 4a, 4b) pouvant prendre différents états de commutation et comprenant un dispositif de détection permettant de déterminer du contenu informatif concernant le modèle d'état représenté en détectant les états de commutation des éléments fonctionnels (4, 4a, 4b), **caractérisé en ce que** l'appareil (1; 1'; 1") comprend :
l'unité fonctionnelle (2; 2a, 2b, 2c),
un dispositif de commande (5) permettant de commander l'unité fonctionnelle (2; 2a, 2b, 2c) au moyen de signaux de commande,
une unité de décodage (6) permettant de générer un modèle d'état dans le dispositif d'affichage (3; 3a, 3b, 3c) à partir du signal de commande,
**caractérisé en ce que** l'appareil (1; 1'; 1") est configuré pour mettre en œuvre le procédé selon l'une des revendications précédentes et comprend en outre :
un système de génération de signaux (15) permettant de générer un signal de relecture en produisant des signaux CA à partir du contenu informatif déterminé concernant le modèle d'état représenté, et
une carte d'interface (20) permettant de comparer le contenu informatif du signal de relecture avec le contenu informatif du signal de commande.

15. Appareil (1; 1'; 1") selon la revendication 14, **caractérisé en ce qu'**au moins un élément fonctionnel (4, 4a, 4b) est un consommateur électrique, en particulier un point lumineux d'un signal de circulation ou d'un signal de sécurité de train.

16. Appareil (1; 1'; 1") selon la revendication 14 ou 15, **caractérisé en ce que** les éléments fonctionnels (4, 4a, 4b) présentent des DEL comme sources lumineuses.

17. Appareil (1; 1'; 1") selon l'une des revendications 14 à 16, **caractérisé en ce que** l'appareil comprend un codeur de relecture (17) permettant de coder numériquement le contenu informatif concernant le modèle d'état représenté et déterminé par le dispositif de détection dans l'élément fonctionnel (4, 4a, 4b).

18. Appareil (1; 1'; 1") selon l'une des revendications 14 à 17, **caractérisé en ce que** le dispositif de commande (5) est configuré pour commander l'unité fonctionnelle (2; 2a, 2b, 2c) au moyen de signaux de commande codés de manière binaire ou ternaire.

19. Appareil selon l'une des revendications 14 à 18, **caractérisé en ce qu'**un dispositif permettant d'alimenter l'unité fonctionnelle en énergie par des signaux de commande produits par le dispositif de commande (5) est prévu.
